## Europäisches Patentamt
## European Patent Office
## Office européen des brevets

(11) Publication number: **0 153 078**
**B1**

(12) **EUROPEAN PATENT SPECIFICATION**

(45) Date of publication of patent specification: **08.06.88**

(51) Int. Cl.⁴: **F 16 D 13/64, F 16 D 69/04**

(21) Application number: **85300749.0**

(22) Date of filing: **05.02.85**

(54) **Friction clutch driven plate.**

(30) Priority: **17.02.84 GB 8404268**

(43) Date of publication of application:
**28.08.85 Bulletin 85/35**

(45) Publication of the grant of the patent:
**08.06.88 Bulletin 88/23**

(84) Designated Contracting States:
**DE FR GB IT**

(56) References cited:
**DE-A-1 425 208**
**FR-A-1 479 317**
**FR-A-2 356 840**
**FR-A-2 424 446**
**GB-A-2 090 372**
**US-A-3 754 627**
**US-A-3 917 043**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Maycock, Ian Commander**
**149 Cubbington Road**
**Lillington Leamington Spa Warwickshire (GB)**
Inventor: **Crawford, Peter Frederick**
**The Gables Stoneleigh Road**
**Bubbenhall Coventry West Midlands (GB)**

(74) Representative: **Cundy, Anthony Brian**
**Anthony Cundy & Company 384 Station Road**
**Dorridge**
**Solihull West Midlands B93 8ES (GB)**

Courier Press, Leamington Spa, England.

## Description

The invention relates to a friction clutch driven plate according to the preamble of Claim 1. Most conventional friction clutch driven plates incorporate two friction facings mounted one to either side of spring steel segments or a flexible steel disc by means of which the friction facings are mounted to inner parts of the driven plate. In most cases the mountings for the friction facings provide axial cushioning to assist smooth clutch engagement. It has also been proposed to use a friction member in the form of a single two-sided friction facing because this cuts down the weight requirement around the outer part of the driven plate and thus contributes substantially to a reduced moment of inertia. However, there have been difficulties associated with providing a satisfactory mounting of the friction member on the inner part of the driven plate. For example, DE—A—1 425 208 discloses a friction member which is coupled to the hub by resilient rotary drive means which permits limited angular rotation between the hub and the friction member.

It is an object of the present invention to provide an improved mounting for a friction member, primarily but not exclusively a single two-sided friction facing.

In accordance with one aspect of the present invention there is provided a friction clutch driven plate comprising a hub assembly incorporating a hub and two mutually spaced flanges extending therefrom; a friction member carrier arranged adjacent the flange and extending between the flanges, capable of limited relative angular rotation with respect thereto and coupled to the flange by resilient rotary drive means; the friction member carrier being provided with outwardly extending teeth around its outer periphery and an annular friction member having corresponding inwardly directed teeth to engage with the teeth of the carrier and provide drive between the carrier and the friction member, wherein the flanges provide axial constraining means to retain the teeth of the friction member in engagement with the teeth of the carrier. ·

Preferably the friction member is constituted by a solid piece of friction material having an outer part with two opposed annular friction faces and a widened inner part incorporating the inwardly directed teeth.

The friction member may alternatively comprise two friction facings mounted on a support and axial cushioning may be provided between the two facings.

A radial clearance may be provided in the toothed engagement between the friction member and the carrier to allow relative radial expansion and contraction of the carrier and friction member. In use, the friction member may be heated significantly above the temperature of the carrier in which case it expands radially. By providing for free relative expansion and contraction at the toothed engagement, any tendency to produce distortion due to this expansion and contraction is reduced. The two opposed faces on each tooth of the carrier or of the friction member may be mutually parallel in order to prevent substantial clearance developing in the toothed connection during expansion of the friction member.

Alternatively, a substantial clearance may be provided between the teeth of the friction member and the teeth of the carrier to provide relative angular rotation therebetween and resilient drive means may be provided to control the relative rotation and thereby provide for damping of vibrations in the drive through the driven plate.

Preferably the friction member is constituted of a mineral-based essentially non-metallic friction material. The driven plate is intended for use in a dry clutch, that is one without lubrication for friction faces. For that purpose an asbestos-based friction material is suitable.

However, substitutes for asbestos-based materials which have been introduced to eliminate health risks from asbestos may also be suitable.

Embodiments of the invention will now be described by way of example only with reference to the accompanying drawings in which:—

Figure 1 is a cross-section through a clutch driven plate illustrating a first embodiment of the invention;

Figure 2 is a view in the direction of arrow II of Figure I with some parts removed in the interests of clarity;

Figure 3 is a view corresponding to Figure 2 but showing a modified friction member; and

Figure 4 is a section of line IV—IV of Figure 3.

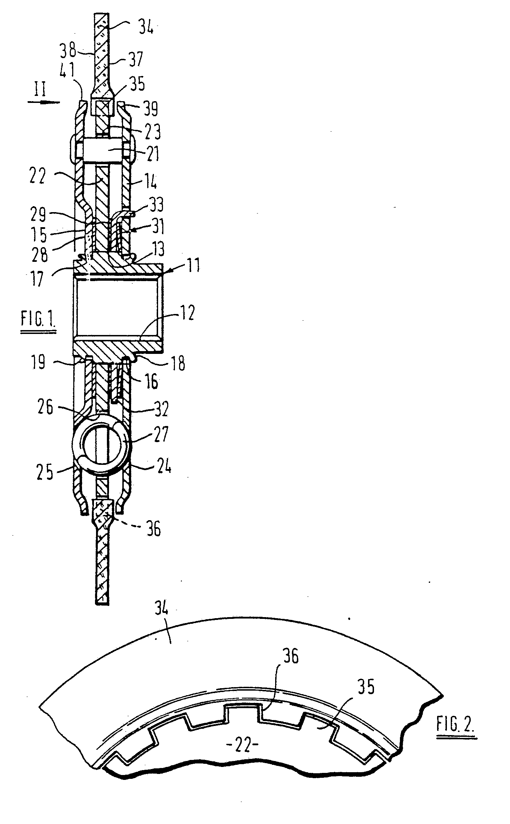

The friction clutch driven plate shown in Figures 1 and 2 incorporates a hub 11 having internal splines 12 to enable the hub to drive a gearbox input shaft. The hub is generally cylindrical with a projecting boss 13 remote from its two ends. Two annular side plates 14 and 15 are secured to the hub 11 at the extremities of the boss 13 so that they form two mutually spaced flanges which together with the hub 11 form a hub assembly. In this example, the inner edges of the side plates 14 and 15 have sets of inwardly directed teeth 16 and 17 which bite into shoulders at the edges of the boss 13 and are then more positively located by deforming these shoulders as illustrated at 18 and 19. The outer parts of the side plates or flanges 14 and 15 are also held in the required mutually spaced relationship by large shouldered rivets 21 which serve another purpose to be described subsequently and are normally referred to as stop pins. The hub assembly as thus far described is in practice assembled around other parts of the driven plate which are now to be described.

A friction member carrier constituted primarily by an intermediate annular plate 22 is arranged between the side plates 14 and 15 and in itself is freely rotatable on the boss 13. The intermediate plate 22 has circumferentially elongated apertures 23 through which the stop pins 21 extend. The length of these apertures limit the extent of relative angular rotation possible between the hub assembly and friction member carrier. Side plates 14 and 15 and intermediate plate 22 also have a series of aligned rectangular apertures 24, 25 and 26 and a circumferentially directed coil spring 27 is arranged in each set of aligned apertures. These springs provide a resilient rotary drive means between the hub assembly and the friction member carrier.

Between the inner parts of the side plates 14 and 15 and the intermediate plate 22 there is a conventional friction system for providing frictional resistance to movement between the hub assembly and carrier. This consists of two friction washers 28 and 29, one to each side of the intermediate plate and a belville spring 31 reacting on side plate 14 and causing a bearing washer 32 to load the friction washers 28 and 29 axially. Bearing washer 32 has at least one tongue 33 engaged in side plate 14 to ensure that it rotates therewith.

The invention is concerned with the nature of the mounting of a friction member on the friction member carrier, in this example the mounting of a single facing 34, on the intermediate plate 22.

The outer periphery of intermediate plate 22 carries a series of radially directed teeth 35 and these engage with a corresponding series of inwardly directed teeth 36 on the annular friction facing 34. The form and the engagement of these teeth is most readily seen on Figure 2. The opposed drive faces of each tooth 35 are parallel to each other rather than being strictly radial and constitute a recess between teeth rather than a tooth itself of the friction facing 34, the two drive faces are correspondingly parallel. This arrangement provides that in the event of differential expansion between the intermediate plate and the friction facing, the radial expansion of the friction facing does not result in a significant increase in circumferential clearance between teeth which may otherwise introduce an undesired freedom for relative rotation. A positive circumferential clearance is shown in Figure 2 in the interests of clarity but in practice the circumferential clearance should be as small as possible. There is however a deliberate radial clearance between the intermediate plate and friction facing at the toothed connection 35, 36 to ensure that on differential expansion between the carrier and facing, these two components do not load each other in such a way as might cause distortion.

The friction member 34 is constituted by a solid piece of friction facing material as is normally used in dry friction clutches. In the interests of providing sufficient strength for the teeth 36, the inner periphery of the friction facing is widened as shown in Figure 1 while the outer part of the facing has two opposed friction faces 37 and 38.

In order to hold the friction facing 34 axially on the teeth 35, the two side plates 14 and 15 extend out beyond the inner periphery of the friction facing and have inwardly turned edges 39 and 41 to provide axial constraining means with a small clearance for axial float of the facing.

In a modification, instead of arranging for the teeth 35 to have mutually parallel faces, the teeth 36 of the friction facing may have parallel faces in which case the recesses between teeth on the carrier have corespondingly parallel faces.

Because the friction member is a single friction facing in place of the two friction facings provided on most conventional single dry plate clutches, the driven plate can be designed to have a low moment of inertia. Also, as friction facings constitute a large part of the cost of a driven plate the total cost can be relatively low.

However, in a further modification the friction member may be constituted by two friction facings mounted on a support and the support may incorporate or be provided with cushioning means to cushion the clamping of the driven plate during use.

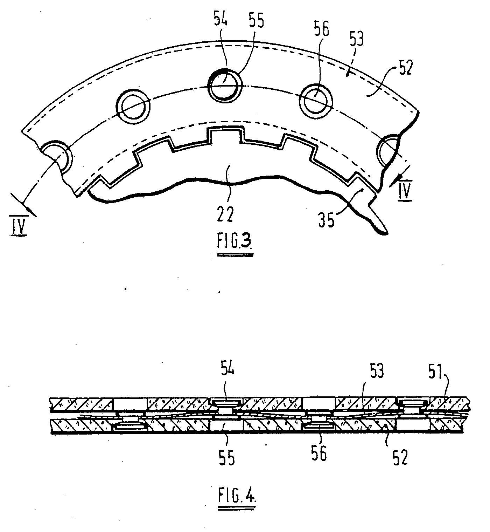

Such an arrangement is illustrated in Figures 3 and 4 which show a modified form of friction member. Figure 4 is a view corresponding to Figure 2 but showing the modified friction member only. The friction member comprises two friction facings 51 and 52 (see Figure 4) and a spring steel support 53 interposed between the facings. Element 53 is slightly corrugated so that it spaces the facing 51 and 52 apart by a distance greater than its own thickness and provides a cushioning means as the two friction facings are clamped together during take-up of drive through a friction clutch incorporating the driven plate. Friction facing 51 is mounted on the element 53 by a series of recessed rivets 54. Each of these rivets is countersunk into the facing 51 and is in register with an opening 55 in the facing 52 to provide access to and clearance for the rivet. Rivets 54 are arranged at positions where the facing 51 is in contact with the element 53.

Similar rivets 56 arranged in a similar way secure the friction facing 52 to the support 53 so that in effect the two facings 51 and 52 are secured together through the intermediary of the support 53. Both elements 51 and 52 have inwardly directed teeth as shown in Figure 3 and these teeth engage with the teeth 35 of the intermediate plate 22. The toothed connection thus provides a drive between the two facings of the friction member and the intermediate plate 22.

The teeth 35 and 36 in Figure 2 and the corresponding teeth in Figure 3 are shown to be of substantially equal circumferential dimensions. However, a wide variety of variations of toothed interconnection could be provided as alternatives. For example, the circumferential extent of one set of teeth could be increased compared with that of the other set to the extent where the teeth become a small number of projections from one member engaging in corresponding recesses in the other member. Also, although the parallel sided teeth are preferred, other tooth shapes providing flat or curve engagement surfaces may be employed.

In a still further modification, the two flanges 14 and 15 and intermediate plate 22 may be replaced by a single central flange and two side plates coupled together to move in unison and form the friction member carrier.

## Claims

1. A friction clutch driven plate comprising a hub assembly incorporating a hub (11) and two mutually spaced flanges (14, 15) extending therefrom; a friction member carrier (22) arranged adjacent to the flange and extending between the flanges, capable of limited relative angular rotation with respect thereto and coupled to the flange by resilient rotary drive means (27); the friction member carrier being provided with outwardly extending teeth (35) around its outer periphery and an annular friction member (34) having corresponding inwardly directed teeth (36) to engage with the teeth of the carrier and provide drive between the carrier and the friction member characterised in that the flanges (14, 15) provide axial constraining means (39, 41) to retain the teeth (36) of the friction member (34) in engagement with the teeth of (35) the carrier (22).

2. A friction clutch driven plate as claimed in claim 1, characterised in that the friction member is constituted by a solid piece of friction material having an outer part with two opposed annular friction faces (37, 38) and a widened inner part incorporating the inwardly directed teeth (36).

3. A friction clutch driven plate as claimed in claim 1 or 2, characterised in that the friction member comprises two friction facings (51, 52) mounted on a support (53).

4. A friction clutch driven plate as claimed in claim 3, characterised in that axial cushioning is provided between the two facings.

5. A friction clutch driven plate as claimed in any one of the preceding claims, characterised in that a radial clearance is provided in the toothed engagement between the friction member (34) and the carrier (22) to allow relative radial expansion and contraction of the carrier and friction member.

6. A friction clutch driven plate as claimed in claim 5, characterised in that the opposed faces of each tooth of the carrier or the friction member are mutually parallel.

7. A friction clutch driven plate as claimed in any one of the preceding claims, characterised in that a substantial circumferential clearance is provided between the teeth of the friction member and the teeth of the carrier to provide relative angular rotation therebetween and in that resilient drive means controls the relative rotation and provides for damping of vibrations in the drive through the driven plate.

8. A friction clutch driven plate as claimed in any one of the preceding claims, characterised in that the friction member is constituted of a non-metallic mineral-based friction material.

## Patentansprüche

1. Angetriebene Reibungskupplungsscheibe mit einer Nabenbaugruppe, die eine Nabe (11) und zwei voneinander beabstandete Flansche (14, 15), die von ihr abstehen, beinhaltet; eine Reibungsteilträger (22), der angrenzend an den Flansch angeordnet ist und zwischen den Flanschen verläuft, eine begrenzte Winkeldrehung ihm gegenüber ausführen kann und mit dem Flansch durch eine federnd nachgebende Drehantriebseinrichtung (27) gekuppelt ist; wobei der Reibungsteilträger mit nach außen stehenden Zähnen (35) um seinen äußeren Rand herum versehen ist und ein ringförmiges Reibungsteil (34) entsprechende, nach innen gerichtete Zähne (36) zum Eingriff mit den Zähnen des Trägers und für die Antriebsübertragung zwischen dem Träger und dem Reibungsteil hat, dadurch gekennzeichnet, daß die Flansche (14, 15) eine axiale Sperreinrichtung (39, 41) bilden, um die Zähne (36) des Reibungsteiles (34) im Eingriff mit den Zähnen (35) des Trägers (22) zu halten.

2. Angetriebene Reibungskupplungsscheibe nach Anspruch 1, dadurch gekennzeichnet, daß das Reibungsteil aus einem massiven Reibungsmaterialstück gebildet ist, das einen äußeren Teil mit zwei entgegengesetzten ringförmigen Reibungsflächen (37, 38) und einen erweiterten inneren Teil, der die nach innen gerichteten Zähne (36) beinhaltet, hat.

3. Angetriebene Reibungskupplungsscheibe nach Anspruch 1 oder 2, dadurch gekennzeichnet, daß das Reibungsteil zwei Reibungsbeläge (51, 52) umfaßt, die auf einem Träger (53) montiert sind.

4. Angetriebene Reibungskupplungsschheibe nach Anspruch 3, dadurch gekennzeichnet, daß eine axiale Abfederung zwischen den beiden Belägen vorhanden ist.

5. Angetriebene Reibungskupplungsscheibe nach einem der vorhergehenden Ansprüche, dadurch gekennzeichnet, daß ein radiales Spiel in dem Zahneingriff zwischen dem Reibungsteil (34) und dem Träger (22) vorhanden ist, um eine relative radiale Ausdehnung und Zusammenziehung des Trägers und des Reibungsteiles zu gestatten.

6. Angetriebene Reibungskupplungsscheibe nach Anspruch 5, dadurch gekennzeichnet, daß die entgegengesetzten Flächen von jedem Zahn des Trägers oder des Reibungsteiles zueinander parallel sind.

7. Angetriebene Reibungskupplungsscheibe nach einem der vorhergehenden Ansprüche, dadurch gekennzeichnet, daß ein erhebliches Umfangsspiel zwischen den Zähnen des Reibungsteiles und den Zähnen des Trägers vorhanden ist, um eine relative Winkeldrehung zwischen ihnen zu schaffen, und daß die federnd nachgebende Antriebseinrichtung die Relativdrehung steuert und für die Dämpfung von Schwingungen im Antrieb durch die angetriebene Scheibe sorgt.

8. Angetriebenen Reibungskupplungsscheibe nach einem der vorhergehenden Ansprüche, dadurch gekennzeichnet, daß das Reibungsteil aus einem nicht-metallischen Reibungsmaterial auf Mineralbasis gebildet ist.

## Revendications

1. Disque d'embrayage à friction comprenant un ensemble moyeu comportant un moyeu (11) et deux flasques espacés l'une de l'autre (14, 15) s'étendant à partir de celui-ci, un porte-pièce de friction (22) disposé en position adjacente aux flasques, s'étendant entre ces flasques, susceptible d'un rotation angulaire relative limitée par rapport à eux et accouplé à ces flasques par des moyens élastiques d'entraînement en rotation (27), le porte-pièce de friction présentant des dents dirigées vers l'extérieur (35) tout autour de son contour périphérique extérieur et une pièce annulaire de friction (34) offrant des dents correspondantes dirigées vers l'intérieur (36) destinées à engrener avec les dents du porte-pièce de friction et à fournir un entraînement entre ce porte-pièce de friction et la pièce de friction, caractérisé en ce que les flasques (14, 15) comportent des moyens de retenue axiale (39, 41) destinés à retenir les dents (36) de la pièce de friction (34) en prise avec les dents (35) du porte-pièce de friction (22).

2. Disque d'embrayage à friction suivant la revendication 1, caractérisé en ce que la pièce de friction est constituée par une pièce pleine en matériau de friction et offrant une partie extérieure comportant deux faces annulaires opposées de friction (37, 38) et une partie intérieure plus épaisse présentant les dents dirigées vers l'intérieur (36).

3. Disque d'embrayage à friction suivant la revendication 1 ou 2, caractérisé en ce que la pièce de friction comprend deux garnitures de friction (51, 52) montées sur un support (53).

4. Disque d'embrayage à friction suivant la revendication 3, caractérisé en ce qu'un amortissement axial est prévu entre les deux garnitures.

5. Disque d'embrayage à friction suivant l'une quelconque des revendications précédentes, caractérisé en ce qu'une certaine possibilité de débattement radial est prévue dans l'engrènement entre dents prévu entre la pièce de friction (34) et le porte-pièce de friction (22) de façon à permettre une dilatation et une contraction radiales relatives de ce porte-pièce de friction et cette pièce de friction.

6. Disque d'embrayage à friction suivant la revendication 5, caractérisé en ce que les faces opposées de chaque dent du porte-pièce de friction ou de la pièce de friction sont parallèles entre elles.

7. Disque d'embrayage à friction suivant l'une quelconque des revendications précédentes, caractérisé en ce qu'une possibilité de débattement circonférentiel notable est prévue entre les dents de la pièce de friction et les dents du porte-pièce de friction afin d'autoriser une rotation angulaire relative entre eux et en ce que des moyens élastiques d'entraînement contrôlent cette rotation relative et permettent ainsi un amortissement des vibrations dans l'entraînement s'effectuant à travers le disque d'embrayage.

8. Disque d'embrayage à friction suivant l'une quelconque des revendications précédentes, caractérisé en ce que la pièce de friction est constituée d'un matériau de friction à base minérale et non métallique.

FIG. 1.

FIG. 2.

-22-

FIG.3

FIG.4.